(19) Europäisches Patentamt
European Patent Office
Office européen des brevets

(11) **EP 1 464 453 A2**

(12) **EUROPEAN PATENT APPLICATION**

(43) Date of publication:
06.10.2004 Bulletin 2004/41

(51) Int Cl.⁷: **B25J 9/16**

(21) Application number: **04251856.3**

(22) Date of filing: **29.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **31.03.2003 JP 2003096574**

(71) Applicant: **FANUC LTD**
**Minamitsuru-gun, Yamanashi 401-0597 (JP)**

(72) Inventors:
• **Watanabe, Atsushi**
**Suginami-ku Tokyo 168-0072 (JP)**

• **Ito, Takayuki**
**Minamitsuru-gun Yamanashi 401-0310 (JP)**
• **Kosaka, Tetsuya,**
**R. 11-403 Fanuc Manshonharimomi**
**Minamitsuru-gun Yamanashi 401-0511 (JP)**
• **Takizawa, Katsutoshi**
**Setagaya-ku Tokyo 157-0067 (JP)**

(74) Representative: **Billington, Lawrence Emlyn**
**Haseltine Lake & Co.**
**Imperial House**
**15-19 Kingsway**
**London WC2B 6UD (GB)**

(54) **Flexure correction apparatus and method for robot**

(57) A robot flexure correction device and method in which flexure amount correction can be automatically performed on taught points. For each robot model and for each of loads that are different in weight and center-of-gravity position, flexure amounts representing deviations of a robot front end are measured at a plurality of positions in a robot operating area, and stored as flexure amount data. When a robot is used, flexure amount data about the model of the used robot and about the load that is close in weight and center-of-gravity position to a used tool is designated from flexure amount data files (1-1 to 1-m) by a flexure amount data designation means (3). A program is designated from programs (2-1 to 2-n) by an operation program designation means (4). By a flexure amount calculation means (5), a flexure amount for each of taught point positions/orientation in the program is calculated using the flexure amount data. By a position correction means (6), each of the taught point positions/orientations is corrected on the basis of the obtained flexure amount. Thus, a corrected program is obtained. Flexure amount data only needs to be created once by a robot manufacturer or the like. Merely by designating flexure amount data on the basis of the weight and center-of-gravity position of a tool to be used, a user can automatically obtain a program corrected as regards flexure amount.

FIG. 1

**Description**

BACKGROUND OF THE INVENTION

1. Field of the Invention

The present invention relates to correction of deviation of an operational position/orientation of a robot designated by an operation program due to flexure of the robot.

2. Description of Related Art

An industrial robot performs various kinds of operations with appropriate one of various kinds of tools attached to a wrist at a distal end of a robot mechanism. A position/orientation of the wrist deviates by flexure of the robot mechanism such as displacement of joints and elastic deformation of arms. A command designating a target position/orientation is given to the robot mechanism, and the robot mechanism moves to take the target position and orientation. The amount and direction of flexure of the robot mechanism varies depending on the designated position and orientation. In a method in which an operational position/orientation is taught by actually operating a robot, the position including the flexure amount is taught, so that problem is scarcely caused. With a robot operation program generated by an off-line programming apparatus, there are such cases that although a robot is moved to a taught point position designated by the program, the robot cannot be set at a target position due to a flexure amount. This leads to errors in robot operation.

Thus, there is known a method in which models of displacement of joints, elastic deformation of arms and the like are created, and parameters specifying the models are defined. When a robot operates, a flexure amount is obtained from a load on a hand and a target orientation, and control is performed to negate the flexure amount (see JP 2002-307344A and JP 7-276273A).

In another known method, a robot operating area is divided according to a lattice formed of equally spaced lines, and a joint angle correction amount at each lattice point coordinates is measured in advance and stored as a representative-point angle correction amount table. An angle correction amount for a target arm position and orientation is obtained by interpolation using data stored as joint angel correction amounts at eight lattice points close to the target arm position. Using the obtained angle correction amount, the target joint angle is corrected (see JP 2002-219674A).

As a method for correcting deviation of a robot front end position due to flexure of robot arms and the like, the method creating and using models as shown in the above-mentioned JP 2002-307344A and JP 7-276273A has a problem that model creation errors and parameter definition errors lower the accuracy of correction. The method shown in JP 2002-219674A is free from model creation errors. However, since the angle correction amounts for each shaft are affected by solid mechanical part errors (arm length errors, attachment angle errors, joint errors and the like) of individual robots, the angle correction amounts for each shaft are data peculiar to individual robots.

Further, in the above-mentioned two types of methods, it is necessary to define models and/or measure angle correction amounts for each of robots requiring flexure correction, using an accurate three-dimensional measuring apparatus. Further, the flexure amount also varies depending on load conditions (weight and center-of-gravity position) of a working tool attached to a robot hand. Hence, when many robots and tools are used as in a spot welding line in automotive manufacturing, it is difficult to carry out measurement using a three-dimensional measuring apparatus at an actual production site. Thus, there exists no method suitable for flexure correction performed at an actual production site, and correction of taught point positions/orientations is mostly still performed manually. When there are many taught points, the operation for manual correction of the taught point positions/orientations is cumbersome and lowers the overall operation efficiency.

SUMMARY OF THE INVENTION

The present invention provides flexure correction device and method capable of performing flexure amount correction of taught points easily and automatically.

A flexure correction device of the present invention corrects deviation in position and/or orientation of a distal end of an arm due to flexure of a robot. According to an aspect of the present invention, the flexure correction device comprises: reference flexure amount storage means storing a plurality of reference flexure amounts representing deviations in position and/or orientation of the distal end of the arm, which are measured at a plurality of positions in a robot operating area under a plurality of load conditions different in weight and/or position of center of gravity; designating means for designating one or more reference flexure amounts to be used in the plurality of stored reference flexure amounts; flexure amount calculation means for obtaining a flexure amount for each position of taught points in a robot operation program based on the designated reference flexure amounts; and correction means for correcting position/orientation at each of the taught points based on the calculated flexure amount, to thereby eliminate deviation in position and/or orientation at each of the taught points due to flexure of the robot. In this case, the flexure correction device may be constituted by an off-line programming apparatus, or a robot controller.

According to another aspect of the present invention, the flexure correction device comprises: reference flexure-amount data storage means storing a plurality of reference flexure amounts representing deviations in position and/or orientation of the distal end of the arm, which are measured at a plurality of positions in a robot operating area under a plurality of load conditions different in weight and/or position of center of gravity; designation means for designating one or more reference flexure amounts to be used in the plurality of stored reference flexure amounts; flexure amount calculation means for calculating a flexure amount for each of taught points and interpolation points based on the designated flexure amount in performing playback of a robot operation program; and correction means for correcting position/orientation at each the taught points and interpolation points based on the calculated flexure amount. In this case, correction of position/orientation is also performed on the interpolation points by a robot controller.

A flexure correction method of the present invention corrects deviation in position and/or orientation of a distal end of an arm due to flexure of a robot using an off-line programming apparatus or a robot controller. The method comprises the steps of: measuring flexure amounts representing deviations in position and/or orientation of the distal end of the arm at a plurality of positions in a robot operating area for each of a plurality of load conditions different in weight and/or position of center of gravity, and storing the measured flexure amounts in storage means as reference flexure amounts; selecting and designating one or more of the plurality of reference flexure amounts stored in the storage means in accordance with weight and/or position of center of gravity of a tool to be used; calculating a flexure amount for each of taught points in a robot operation program based on the designated reference flexure amounts using the off-line programming apparatus or the robot controller; and correcting position/orientation at each of the taught points based on the calculated flexure amount.

Further, the flexure correction method may comprise the steps of: measuring flexure amounts representing deviations in position and/or orientation of the distal end of the arm at a plurality of positions in a robot operating area for each of a plurality of load conditions different in weight and/or position of center of gravity, and storing the measured flexure amounts in storage means as reference flexure amounts; selecting and designating one or more of the plurality of reference flexure amounts stored in the storage means in accordance with weight and/or position of center of gravity of a tool to be used; calculating a flexure amount for each of taught points and interpolation points based on the selected reference flexure amounts in a playback operation of a robot operation program; and correcting position/orientation at each of the taught points and interpolation points based on the calculated flexure amount.

## BRIEF DESCRIPTION OF THE DRAWINGS

FIG. 1 is a functional block diagram of a flexure correction device for performing a flexure amount correction method according to the invention,
FIG. 2 is a block diagram showing relevant parts of an off-line programming apparatus that is an embodiment of a flexure correction device for performing a flexure correction method according to the invention,
FIG. 3 is a flow chart showing the process of flexure correction in the above embodiment, and
FIG. 4 is an illustration for explaining flexure amount data used in the above embodiment.

## DETAILED DESCRIPTION

In the invention, for each robot model (mechanical parameters such as an arm length are fixed for each robot model), flexure amounts representing deviations in position and orientation of a robot arm front end wrist are measured to obtain flexure amount data for correction. Specifically, an operating area of a robot is divided according to a lattice, and a flexure amount is measured at each lattice point, each time a robot wrist orientation is changed by a predetermined amount. The measured flexure amount consists of a flexure amount $(Txi, Tyi, Tzi)$ with reference to an orthogonal coordinate system X-Y-Z and a wrist orientation flexure amount $(Twi, Tpi, Tri)$. It is to be noted that amounts of deviation of a robot front end position are measured as flexure amounts for each of loads attached to the robot mechanism front end wrist that are different in weight and center-of-gravity position. Flexure amount data is obtained this way. When it is anticipated what types of working tools will be attached to the robot mechanism front end wrist of a certain model of robot, flexure amounts may be measured with each of those working tools attached to the wrist.

When flexure amounts are measured, each lattice point position and a plurality of wrist orientations at each lattice point position are given by instructions. The robot is set at each of the given positions, where the three-dimensional position of a tool center point of the robot arm front end part and each of the plurality of wrist orientations are measured with a three-dimensional measuring apparatus. Then, a difference between the position and orientation given by an instruction and the measured position and orientation is obtained as a flexure amount (Txi, Tyi, Tzi, Twi, Tpi, Tri). It is to be noted that this measurement of flexure amounts is performed for each of loads attached to a robot wrist flange that are different in weight and center-of-gravity position. It is also possible to measure flexure amounts about a plurality of robots of the same model and obtain average flexure amounts as flexure amounts for that model.

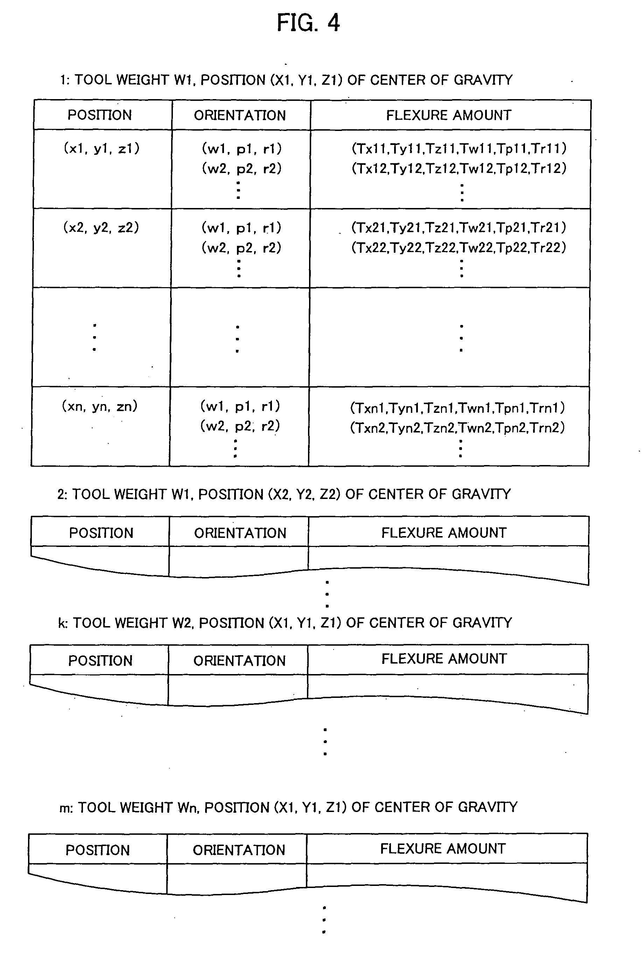

FIG. 4 is an illustration for explaining flexure amount data stored in a storage medium.

As seen from FIG. 4, a flexure amount (Tx, Ty, Tz, Tw, Tp, Tr) is measured and stored for each of tool weights W1 to Wn, for each of tool centers of gravity (X1, Y1, Z1), and for each of a plurality of orientations (w, p, r) at each robot position (x, y, z). Flexure amount data only needs to be created once for each robot model. For each robot model, a robot maker or the like measures a flexure amount for each weight, for each center-of-gravity position, and for each robot position and orientation, in advance, stores the obtained flexure amounts in a storage medium such as a flexible disk or a compact disk as flexure amount data as shown in FIG. 4, and ships robots with this flexure amount data. From the stored flexure amount data, a user selects and uses flexure amount data corresponding to a working tool to be used.

When a robot operation program generated by an off line programming apparatus is applied to a robot, flexure amount correction is automatically performed on taught point positions (and orientations) designated by the operation program and also on interpolation positions, by the off-line programming apparatus or a robot controller, using the flexure amount data.

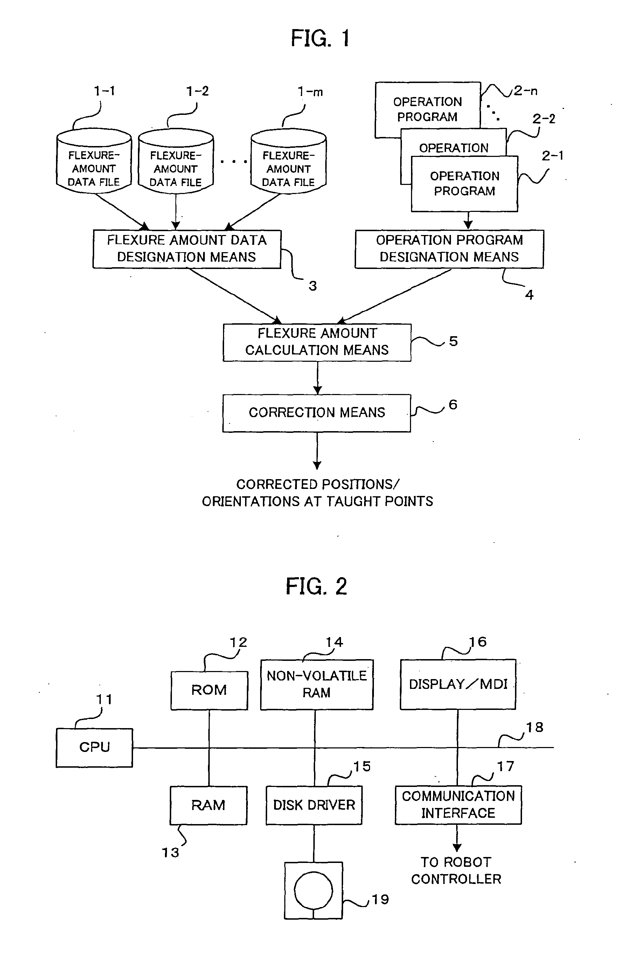

FIG. 1 is a functional block diagram of a flexure correction device (an off-line programming apparatus or a robot controller) for performing this flexure amount correction method.

From flexure amount data 1-1 to 1-m, a flexure amount data file containing flexure amounts for the model of a robot to be used and for the load which is closest in weight and center-of-gravity position to a working tool to be used is selected and designated with flexure amount data designation means 3. From operation programs 2-1 to 2-n, an operation program to be used is selected and designated with operation program designation means 4. On the basis of the flexure amount data designated this way, flexure amount calculation means 5 calculates a flexure amount for each of the taught point positions (and orientations) taught by the designated operation program.

Various ways are conceivable to calculate a flexure amount for each of the taught point positions on the basis of the flexure amount data. For example, provided that a taught point position and orientation designated by an operation program is (xa, ya, za, wa, pa, ra), a position (x, y, Z) closest to the taught point position (xa, ya, za) is selected from the flexure amount data. Then, from a plurality of orientations stored as orientations at the position (x, y, z), an orientation (w, p, r) closest to the orientation (wa, pa, ra) at the taught point position is selected. Then, a flexure amount (Tx, Ty, Tz, Tw, Tp, Tr) stored as corresponding to the selected position and orientation (x, y, z, w, p, r) is obtained as a flexure amount for the taught point.

As another way, it is possible to calculate a flexure amount for each taught point by interpolation. For example, two positions (xi, yi, zi) and (xj, yj, zj) close to the taught point position (xa, ya, za) are selected from the flexure amount data. Then, for each of these two positions, from a plurality of orientations stored as orientations at that position, an orientation closest to the orientation (wa, pa, ra) at the taught point is selected. Then, flexure amounts (Txi, Tyi, Tzi, Twi, Tpi, Tri) and (Txj, Tyj, Tzj, Twj, Tpj, Trj) stored as corresponding to the selected two positions and orientations are obtained, and an average of these two flexure amounts is obtained as a flexure amount for the taught point.

$$\text{Flexure amount for taught point} = [(Txi+Txj)/2, (Tyi+Tyj)/2, (Tzi+Tzj)/2,$$

$$(Twi+Twj)/2, (Tpi+Tpj)/2, (Tri+Trj)/2].$$

Further, though complicated, it is also possible to calculate a flexure amount for a taught point by interpolation using flexure amounts at eight lattice point positions surrounding the taught point. The robot operating space is divided according to a lattice, and flexure amounts at each lattice point are stored as flexure amount data. Hence, the taught point position (xa, ya, za) is surrounded by eight lattice points. For each of these eight lattice point positions, from a plurality of orientations stored as orientations at that lattice point position, an orientation closest to the orientation (wa, pa, ra) at the taught point is selected. Then, eight flexure amounts stored as corresponding to these eight positions and orientations are obtained, and a flexure amount (Tx, Ty, Tz, Tw, Tp, Tr) for the taught point is obtained from these eight flexure amounts by interpolation.

Then, with correction means 6, each taught point position designated by the operation program is corrected by adding to the taught point position a correction amount that is equal in magnitude and opposite in direction to the obtained flexure amount. All the taught point positions taught by the operation program are corrected this way, and the operation program corrected in view of flexure is fed.

FIG. 2 is a block diagram showing relevant parts of an off-line programming apparatus as an embodiment of a flexure correction device for performing a flexure correction method according to the invention. To a processor (CPU) 11, ROM 12, RAM 13, nonvolatile RAM 14, a disk driver 15, a display/MDI 16, and a communication interface are connected by a bus 18.

The processor 11 controls the whole apparatus according to system programs stored in the ROM 12. The RAM 13 is used for temporarily storing data, for example. In the nonvolatile RAM 14 are stored, for example robot operation programs generated by the off line programming apparatus. The disk driver 15 reads flexure amount data from a flexible disk 19. As stated above, a robot machine maker or the like measures flexure amounts for each robot model and for each of loads that are different in tool weight and center-of-gravity position. In the flexible disk 19 are stored flexure amounts obtained this way, as flexure amount data.

The display/MDI 16 includes a display such as a CRT display or a liquid crystal display, and manual data input means such as a keyboard or a mouse for entering data and various instructions. The communication interface 17 is connected to a robot controller by a communication line such as Ethernet (registered trademark).

In this embodiment, flexure amount data is supposed to be stored in the flexible disk 19 as a storage medium. However, it is also possible to store flexure amount data in another storage medium such as a compact disk. When a compact disk is used, the disk driver 15 is a CD driver that reads flexure amount data from the compact disk.

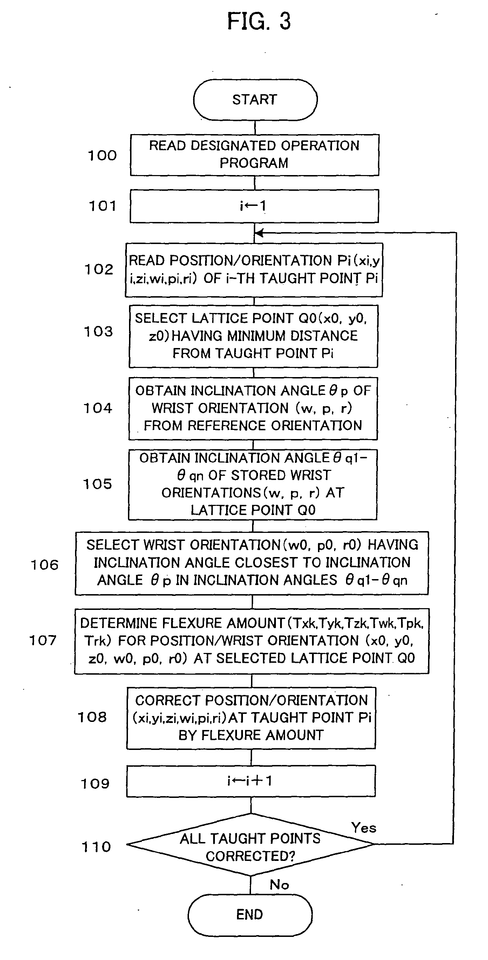

FIG. 3 is a flow chart showing the process of flexure correction in this embodiment, where flexure amount correction is performed on each of taught point positions taught by a robot operation program.

First, as stated above, a flexible disk 19 storing flexure amount data for the model of a robot to be used is set on the disk driver 15. From the flexure amount data stored in the flexible disk 19, flexure amount data about a load that is closest in weight and center-of-gravity position to a working tool attached to the robot to be used is selected and designated by manipulating the display/MDI 16. Then, from the operation programs stored in the nonvolatile RAM 14, an operation program about which flexure amount correction should be performed to operate the robot is selected and designated. Then, when a flexure amount correction instruction is entered, the processor 11 starts the process shown in FIG. 3.

First, the designated operation program is read (Step 100), an index i is set at "1" (Step 101), and an ith taught point position Pi(xi, yi, zi) indicated by the index is read (Step 102). From the designated flexure amount data, a lattice point position Q0 closest to this taught point position is obtained (Step 103). Specifically, eight lattice point positions that each satisfy the expressions $X_k \leq xi < x_{(k+1)}$, $y_k \leq yi < y_{(k+1)}$, and $Z_k \leq zi < z_{(k+1)}$ are obtained, and the lattice point position Q0(x0, y0, z0) that is closest to the taught point position Pi of these eight lattice point positions is obtained.

Next, an orientation that is closest to the robot wrist orientation (w, p, r) at the taught point position Pi, of a plurality of robot wrist orientations stored as the robot wrist orientations at the lattice point position Q0 is obtained. Specifically, an angle $\theta p$ at which the robot wrist orientation (w, p, r) at the taught point position Pi is inclined from a reference orientation is obtained (Step 104), angles $\theta q1$ to $\theta qn$ at which the robot wrist orientations (w, p, r) stored as those at the selected lattice point position Q0 are inclined from the reference orientation are obtained (Step 105), and the wrist orientation (w0, p0, r0) having an angle closest to the angle $\theta$ of the orientation at the taught point position Pi is selected (Step 106). Then, a flexure amount (Txk, Tyk, Tzk, Twk, Tpk, Trk) corresponding to the obtained lattice point position and orientation (x0, y0, z0, w0, p0, r0) is obtained from the flexure amount data (Step 107).

Then, a correction amount that is equal in magnitude and opposite in direction to the obtained flexure amount (Txk, Tyk, Tzk, Twk, Tpk, Trk) is added to the taught point position/orientation Pi(xi, yi, zi, wi, pi, ri), and the taught point position/orientation Pi in the operation program is replaced with this corrected taught point position/orientation (Step 108). Then "1" is added to the index i (Step 109), and the next instruction of the operation program is read. If all the taught points have not been corrected (Step 110), Step 102 is taken again and the process subsequent to Step 102 is performed on the taught point indicated by the index i so that flexure amount correction will be performed and the taught point position/orientation will be replaced with a corrected one. The process is terminated when the flexure amount correction has been performed on all the taught points and all the taught point positions/orientations have been replaced with corrected ones.

In the above embodiment, the flexure correction device is formed by adding a flexure correction function to the off-line programming apparatus. Alternatively, by adding a flexure correction function to the robot controller, the robot controller itself may be formed to function as a flexure correction device.

Like when the flexure correction device is constituted by the off-line programming apparatus, when the flexure correction device is constituted by the robot controller, it may be arranged as follows: First, flexure amount data about the model of a robot to be used and corresponding to the weight and center-of-gravity position of a tool to be used is selected and designated. Then, before the robot executes an operation program to be executed, the robot controller executes the process shown in FIG. 3 to obtain the operation program with taught points each corrected by an amount corresponding to the flexure amount. Then, the robot executes this operation program.

Alternatively, it may be so arranged that as the robot executes an operation program, flexure amount correction is performed on the operation program. Specifically, when the next taught point is read from the operation program, the above-described process is performed to obtain a flexure amount for that taught point and correct the taught point position/orientation by an amount corresponding to the flexure amount. Then, interpolation is performed for moving the robot to the corrected taught point position/orientation, and the robot shafts are driven.

It may be so arranged that flexure amount correction is performed on a position (and orientation) obtained by interpolation. When a taught point is read from the operation program, flexure amount correction like the above-described is performed on an interpolation point position relative to the taught point position obtained by interpolation. Then, a motion command is given to the robot axes on the basis of the corrected interpolation point position. This is performed on each interpolation point position. Regarding the taught point position, a flexure amount for the taught point is obtained, the taught point position/orientation is corrected by an amount corresponding to the flexure amount, and the robot is moved to the corrected taught point position/orientation. It is to be noted that interpolation for obtaining an interpolation point position is performed on the basis of the taught point position not corrected. Flexure correction is performed on the interpolation point position obtained this way, and a motion command is given on the basis of the corrected interpolation point position.

In the above-described embodiment, flexure amounts measured for each of robot models and for each of loads corresponding to working tools in weight and center-of-gravity position are stored in a storage medium as flexure amount data, and flexure amount data about the model of a robot to be used and about the load closest in weight and center-of-gravity position to a working tool to be used is selected. However, when a working tool to be used is predetermined, flexure amount data may be created with the working tool attached to the robot. When the robot is used, the flexure amount data thus obtained with the working tool attached is used.

In the present invention, flexure amount data only needs to be created once in one lump by a robot maker or the like. When a robot is actually used, each of taught point positions/orientations designated by a robot operation program can be automatically corrected, only by selecting and designating flexure amount data about the model of the used robot and about the load that is equal or close in weight and center-of-gravity position to a tool used with the robot. Thus, correction of operation programs generated by the off-line programming apparatus can be performed very easily.

**Claims**

1. A flexure correction device for correcting deviation in position and/or orientation of a distal end of an arm due to flexure of a robot, comprising:

   reference flexure amount storage means storing a plurality of reference flexure amounts representing deviations in position and/or orientation of the distal end of the arm, which are measured at a plurality of positions in a robot operating area under a plurality of load conditions different in weight and/or position of center of gravity;
   designating means for designating one or more reference flexure amounts to be used in the plurality of stored reference flexure amounts;
   flexure amount calculation means for obtaining a flexure amount for each position of taught points in a robot operation program based on the designated reference flexure amounts; and
   correction means for correcting position/orientation at each of the taught points based on the calculated flexure amount.

2. A flexure correction device according to claim 1, constituted by an off-line programming apparatus.

3. A flexure correction device according to claim 1, constituted by a robot controller.

4. A flexure correction device for correcting deviation in position and/or orientation of a distal end of an arm due to flexure of a robot, comprising:

   reference flexure-amount data storage means storing a plurality of reference flexure amounts representing deviations in position and/or orientation of the distal end of the arm, which are measured at a plurality of positions in a robot operating area under a plurality of load conditions different in weight and/or position of center of gravity;
   designation means for designating one or more reference flexure amounts to be used in the plurality of stored reference flexure amounts;
   flexure amount calculation means for calculating a flexure amount for each of taught points and interpolation points based on the designated flexure amount in performing playback of a robot operation program; and
   correction means for correcting position/orientation at each the taught points and interpolation points based on the calculated flexure amount.

**5.** A flexure correction device according to claim 2, constituted by a robot controller.

**6.** A flexure correction method for correcting deviation in position and/or orientation of a distal end of an arm due to flexure of a robot, using an off-line programming apparatus or a robot controller, comprising the steps of:

measuring flexure amounts representing deviations in position and/or orientation of the distal end of the arm at a plurality of positions in a robot operating area for each of a plurality of load conditions different in weight and/or position of center of gravity, and storing the measured flexure amounts in storage means as reference flexure amounts;

selecting and designating one or more of the plurality of reference flexure amounts stored in the storage means in accordance with weight and/or position of center of gravity of a tool to be used;

calculating a flexure amount for each of taught points in a robot operation program based on the designated reference flexure amounts using the off-line programming apparatus or the robot controller; and

correcting position/orientation at each of the taught points based on the calculated flexure amount.

**7.** A flexure correction method for correcting deviation in position and/or orientation of a distal end of an arm due to flexure of a robot using a robot controller, comprising the steps of:

measuring flexure amounts representing deviations in position and/or orientation of the distal end of the arm at a plurality of positions in a robot operating area for each of a plurality of load conditions different in weight and/or position of center of gravity, and storing the measured flexure amounts in storage means as reference flexure amounts;

selecting and designating one or more of the plurality of reference flexure amounts stored in the storage means in accordance with weight and/or position of center of gravity of a tool to be used;

calculating a flexure amount for each of taught points and interpolation points based on the selected reference flexure amounts in a playback operation of a robot operation program; and

correcting position/orientation at each of the taught points and interpolation points based on the calculated flexure amount.

## FIG. 1

FLEXURE-AMOUNT DATA FILE 1-1
FLEXURE-AMOUNT DATA FILE 1-2
· · ·
FLEXURE-AMOUNT DATA FILE 1-m

OPERATION PROGRAM 2-n
· · ·
OPERATION 2-2
OPERATION PROGRAM 2-1

FLEXURE AMOUNT DATA DESIGNATION MEANS 3

OPERATION PROGRAM DESIGNATION MEANS 4

FLEXURE AMOUNT CALCULATION MEANS 5

CORRECTION MEANS 6

CORRECTED POSITIONS/ ORIENTATIONS AT TAUGHT POINTS

## FIG. 2

ROM 12
NON-VOLATILE RAM 14
DISPLAY/MDI 16

CPU 11

18

RAM 13
DISK DRIVER 15
COMMUNICATION INTERFACE 17

TO ROBOT CONTROLLER

19

# FIG. 3

```
                    ┌─────────────┐
                    │    START    │
                    └─────────────┘
                           │
      ┌──────────────────────────────────────┐
100   │  READ DESIGNATED OPERATION           │
      │  PROGRAM                             │
      └──────────────────────────────────────┘
                           │
      ┌──────────────────────────────────────┐
101   │              i←1                     │
      └──────────────────────────────────────┘
                           │
      ┌──────────────────────────────────────┐
102   │ READ POSITION/ORIENTATION Pi(xi,y    │
      │ i,zi,wi,pi,ri) OF i-TH TAUGHT POINT Pi│
      └──────────────────────────────────────┘
                           │
      ┌──────────────────────────────────────┐
103   │ SELECT LATTICE POINT Q0(x0, y0,      │
      │ z0)HAVING MINIMUM DISTANCE           │
      │ FROM TAUGHT POINT Pi                 │
      └──────────────────────────────────────┘
                           │
      ┌──────────────────────────────────────┐
104   │ OBTAIN INCLINATION ANGLE θp OF       │
      │ WRIST ORIENTATION (w, p, r)          │
      │ FROM REFERENCE ORIENTATION           │
      └──────────────────────────────────────┘
                           │
      ┌──────────────────────────────────────┐
105   │ OBTAIN INCLINATION ANGLE θq1-        │
      │ θqn OF STORED WRIST                  │
      │ ORIENTATIONS(w, p, r) AT             │
      │ LATTICE POINT Q0                     │
      └──────────────────────────────────────┘
                           │
      ┌──────────────────────────────────────┐
106   │ SELECT WRIST ORIENTATION(w0, p0, r0) HAVING │
      │ INCLINATION ANGLE CLOSEST TO INCLINATION    │
      │ ANGLE θp IN INCLINATION ANGLES θq1-θqn      │
      └──────────────────────────────────────┘
                           │
      ┌──────────────────────────────────────┐
107   │ DETERMINE FLEXURE AMOUNT (Txk,Tyk,Tzk,Twk,Tpk, │
      │ Trk) FOR POSITION/WRIST ORIENTATION (x0, y0,   │
      │ z0, w0, p0, r0) AT SELECTED LATTICE POINT Q0   │
      └──────────────────────────────────────┘
                           │
      ┌──────────────────────────────────────┐
108   │ CORRECT POSITION/ORIENTATION         │
      │ (xi,yi,zi,wi,pi,ri)AT TAUGHT POINT Pi│
      │ BY FLEXURE AMOUNT                    │
      └──────────────────────────────────────┘
                           │
      ┌──────────────────────────────────────┐
109   │             i←i+1                    │
      └──────────────────────────────────────┘
                           │
                      ╱─────────╲         Yes
110              ╱ ALL TAUGHT POINTS ╲────────┐
                 ╲   CORRECTED?     ╱         │
                      ╲─────────╱             │
                           │ No
                    ┌─────────────┐
                    │     END     │
                    └─────────────┘
```

# FIG. 4

1: TOOL WEIGHT W1, POSITION (X1, Y1, Z1) OF CENTER OF GRAVITY

| POSITION | ORIENTATION | FLEXURE AMOUNT |
|---|---|---|
| $(x1, y1, z1)$ | $(w1, p1, r1)$ <br> $(w2, p2, r2)$ <br> ⋮ | $(Tx11,Ty11,Tz11,Tw11,Tp11,Tr11)$ <br> $(Tx12,Ty12,Tz12,Tw12,Tp12,Tr12)$ <br> ⋮ |
| $(x2, y2, z2)$ | $(w1, p1, r1)$ <br> $(w2, p2, r2)$ <br> ⋮ | $(Tx21,Ty21,Tz21,Tw21,Tp21,Tr21)$ <br> $(Tx22,Ty22,Tz22,Tw22,Tp22,Tr22)$ <br> ⋮ |
| ⋮ | ⋮ | ⋮ |
| $(xn, yn, zn)$ | $(w1, p1, r1)$ <br> $(w2, p2, r2)$ <br> ⋮ | $(Txn1,Tyn1,Tzn1,Twn1,Tpn1,Trn1)$ <br> $(Txn2,Tyn2,Tzn2,Twn2,Tpn2,Trn2)$ <br> ⋮ |

2: TOOL WEIGHT W1, POSITION (X2, Y2, Z2) OF CENTER OF GRAVITY

| POSITION | ORIENTATION | FLEXURE AMOUNT |
|---|---|---|
|  |  |  |

⋮

k: TOOL WEIGHT W2, POSITION (X1, Y1, Z1) OF CENTER OF GRAVITY

| POSITION | ORIENTATION | FLEXURE AMOUNT |
|---|---|---|
|  |  |  |

⋮

m: TOOL WEIGHT Wn, POSITION (X1, Y1, Z1) OF CENTER OF GRAVITY

| POSITION | ORIENTATION | FLEXURE AMOUNT |
|---|---|---|
|  |  |  |

⋮